# EUROPEAN PATENT APPLICATION

(11) **EP 0 602 840 A1**
(43) Date of publication of application: **22.06.1994**
(21) Application number: 93309638.0
(22) Date of filing: 02.12.1993
(51) Int. Cl.: H04M 1/26

(54) **Control of a computer using a telephone handset**

(30) Priority: 17.12.1992 US 992205
(71) Applicant: AT&T Corp., New York, NY 10013-2412 (US)
(72) Inventor: Haas, Lawrence John, Broomfield, Colorado 80020 (US)
(74) Representative: Watts, Christopher Malcolm Kelway, Dr.

(57) **Abstract**

A telephone handset (103) having a manipulandum built into the handset such that the handset can be held in a speaking position with respect to the body of a person and the manipulandum can be manipulated so as to select icons (106,108) or perform other cursor functions on a computer display (102) to control a computer program. The manipulandum itself is situated on the side of the telephone set such that it can be easily manipulated by the thumb of the telephone user in the speaking position. The manipulandum consists of a track ball device (104) that is built into the handset. Also, the manipulandum maybe a joystick that has a number of fixed positions with each position designating a movement of the cursor (109) on the computer display. In addition, the manipulandum maybe a set of switches laid out in a particular pattern with a fixed number of positions with each position indicating the directional movement of the cursor.

## Description

### Technical Field

This inventions relates to control of telecommunication operations, and in particular, to the control of telecommunication operations using a telephone handset.

### Background of the Invention

In the prior art, it is known to do graphics-based call management. U. S. Patent No. 4,653,090 of C. Hayden discloses a system where the telephone instrument includes a graphics screen, such as a personal computer, and a series of call appearance boxes on the screen which represent different call functions. Each possible party to a call is represented by an icon and an associated label which is the party's name. The icon representative of a party is moved, by use of a cursor, inside a communication appearance box on the screen to place that party onto an existing call. The icon representative of the party is moved out of the box to drop the party from the call. In a similar manner, conference calls can be established, and calls may be transferred to other parties. The problem that exists in U.S. Patent No. 4,653,090 is the need to manipulate the icons using a separate mouse device or keyboard. This requires the user of a telephone instrument to use one hand to hold the telephone handset and another hand to manipulate the mouse. In addition, the use of the mouse device limits the mobility of the user to the length of the cable connecting the mouse to the telephone instrument.

A manipulandum is a device that is manipulated to achieve a particular control. In the mechanical art, a manipulandum often takes the form of a control lever or wheel, such as the directional signal actuator and the steering wheel on a car, respectively. In the computer art, a mouse is clearly a manipulandum.

In the computer art, another manipulandum is a joystick. U. S. Patent No. 4,739,128 of M. G. Grisham disloses a joystick which is positioned on the back of a special purpose telephone along with a liquid crystal communication screen. The joystick is utilized to select computer operations by manipulating a cusor on the liquid display. The special purpose telephone also has on the back side a conventional multifrequency dialing pad for placing telephone calls. Neither the joystick nor the keypad can be utilized when a person is speaking on the special purpose telephone. The functions controlled by the joystick appear to be distinct from those involved in controlling a telephone call.

In addition to a mouse which is designed to be moved over a flat surface, a device known as a track ball is also used to position icons. A track ball differs from a mouse in that the track ball device is held stationary and the ball is moved in order to position the icons. U. S. Patent No.5,122,654 of K. Koh discloses a thumb-actuated track ball.

It is an object of this invention to provide a telephone handset which allows a user to carry on a telephone conversation and at the same time control a computer program using the telephone handset.

### Summary of the Invention

This and other objects of the invention are achieved by a telephone handset having a manipulandum built into the handset such that the handset can be held in a speaking position with respect to the body of a person and the manipulandum can be manipulated so as to select icons or perform other cursor functions. The manipulandum itself is situated on the side or top of the telephone set such that it can be easily manipulated by the telephone user in the speaking position. In one embodiment, the manipulandum consists of a track ball device that is built into the handset. Also built into the handset is a switch for indicating that a computer command is to be performed on a selected icon. In a second embodiment, the manipulandum is a joystick that has a number of fixed positions with each position designating a movement of the cursor on the computer display. In addition, an additional control direction of the joystick that is movable along its axis activates an electrical switch. That switch is used to indicate that a computer command be performed on a selected icon. In a third embodiment, the manipulandum is a set of switches laid out in a particular pattern with a fixed number of positions with each position indicating the directional movement of the cursor.

Advantageously, the handset can be a wireless handset with voice information being communicated between the wireless handset and a base station via electromagnetic waves or light with the control information generated by the manipulandum also being communicated utilizing the same medium.

### Brief Description of the Drawing

FIG. 1 illustrates a telephone handset arrangement in accordance with the principles of the invention interconnected to a personal computer having a computer display screen;
FIG. 2 illustrates another embodiment of the invention utilizing a joystick;
FIG. 3 illustrates a third embodiment of the invention utilizing discrete switches;
FIG. 5 illustrates, in detail, a computer for providing telecommunication and data processing functions for use with a telephone handset in accordance with the invention;
FIG. 6 illustrates, in detail, a wireless telephone handset and base station in accordance with the invention; and
FIG. 7 illustrates a fourth embodiment of the invention utilizing a joystick for operation by a forefinger.

### Detailed Description

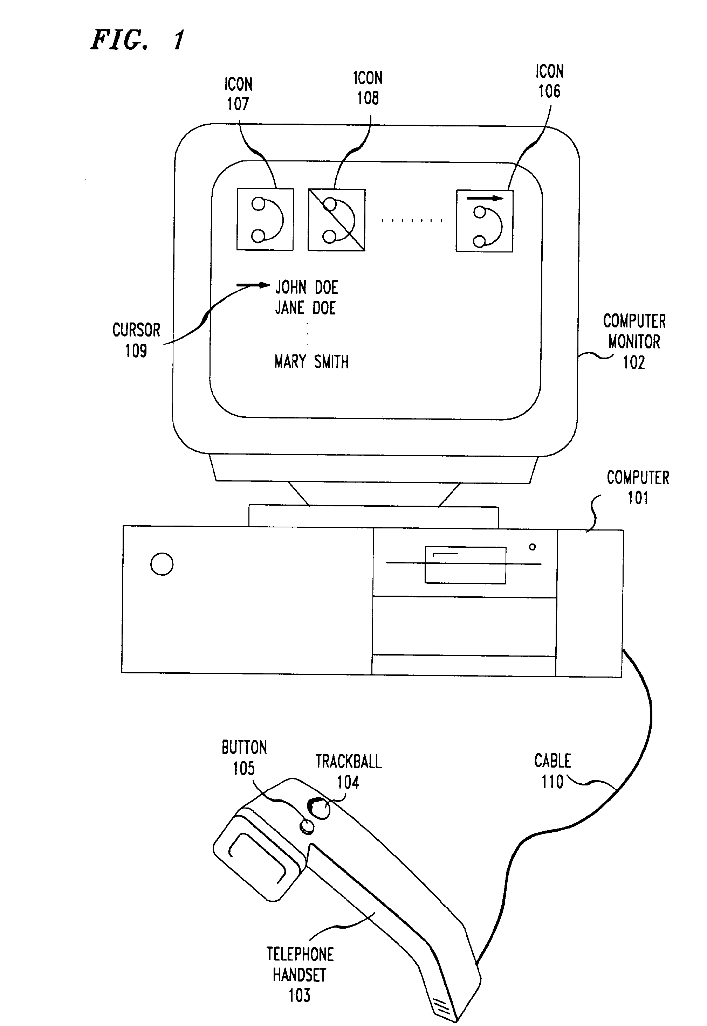

FIG. 1 illustrates a telephone handset 103 which has a built-in track ball 104 in accordance with the invention. Auser of telephone handset 103 controls the operation of computer 101 including telecommunication operations by using track ball 104 to manipulate the position of cursor 109. Once cursor 109 is properly positioned, the user utilizes button 105 to indicate the desired operation. Track ball 104 can rotate in any direction relative to the surface of telephone handset 103. Computer 101 is programmed such that the rotation of track ball 104 in a given direction causes cursor 109 to move in the same direction. For example, to place a telephone call to John Doe, the user positions cursor 109 so that it is touching icon 107 on computer monitor 102 by rotating track ball 104 in the proper direction. Once cursor 109 is positioned on icon 107, the user actuates button 105 twice in quick secession (commonly referred to as a double clicking). Next, the user positions cursor 109 as indicated in FIG. 1 pointing to the name "John Doe" and actuates button 105 once. Computer 101 is responsive to these operations to place a telephone call to John Doe and to interconnect telephone handset 103 in a voice conversation with the telephone handset assigned to John Doe.

To transfer the call established with John Doe to Jane Doe, the user positions cursor 109 to point to icon 106 by rotating track ball 104. Once cursor 109 is positioned on icon 106, the user actuates button 105 twice in quick succession. Next the user positions cursor 109 by rotating track ball 104 to point to the name of Jane Doe. Once cursor 109 is positioned so as to point to Jane Doe, the user clicks button 105 once. Computer 101 is responsive to those operations to transfer the call established with John Doe to Jane Doe so that John Doe and Jane Doe are now engaged in the same telephone call.

The physical and electrical design of a track ball such as track ball 104 is well known in the art. For example, U.S. Patent No. 4,653,090 discloses both the physical and electrical design of a track ball.

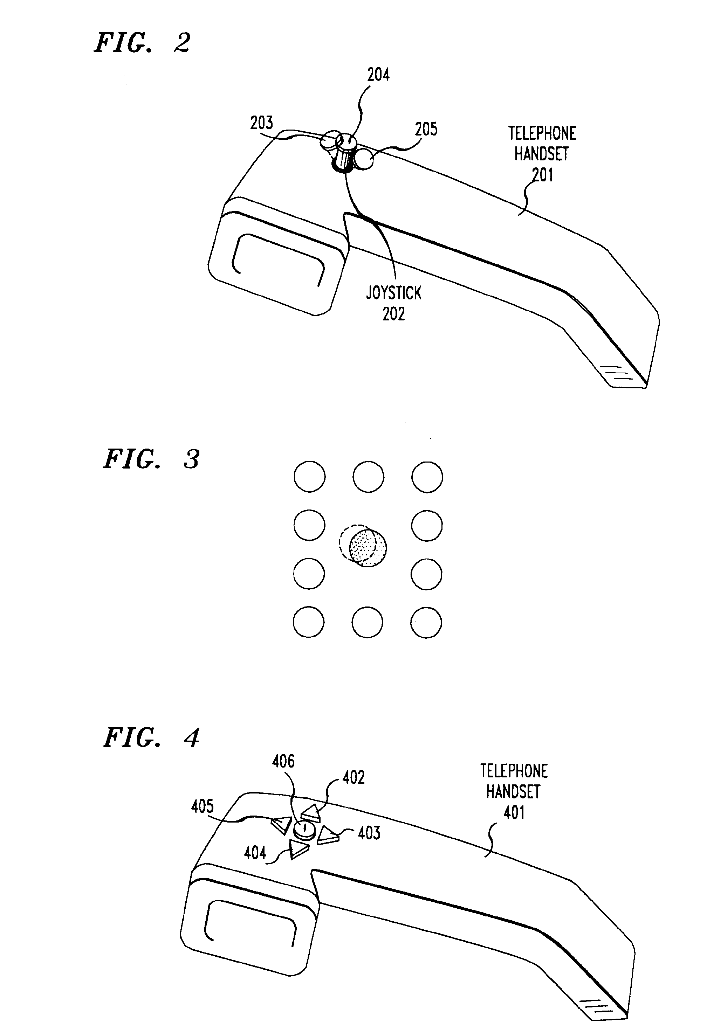

FIG. 2 illustrates a second embodiment of the invention where a thumb controlled joystick is utilized in telephone handset 201 in place of a track ball. The design of joystick 202 is described in detail in U. S. Patent No. 4,739,128. As illustrated in FIG. 3,the joystick has ten positions indicating direction with each position closing one of ten switches. Two of these positions are illustrated in FIG. 2 as 203 and 205. For each directional position, movement of joystick 201 in that direction causes the correspondent switch to be closed providing an electrical indication of the chosen direction to a computer. In addition, in the neutral pos- it ion 204, ifjoystick202 is moved perpendicular to the surface of telephone handset 201, an eleventh switch is closed. This eleventh switch performs the functions of button 105 of FIG. 1.

Telephone handset 401 of FIG. 4 is a third embodiment of the invention. Switches 402 through 406 replace the functions of joystick 201 of FIG. 2. Switches 402 through 405 are used to position the cursor in the direction indicated by the top of each switch. Switch 406 performs the same functions as button 105 of FIG. 1.

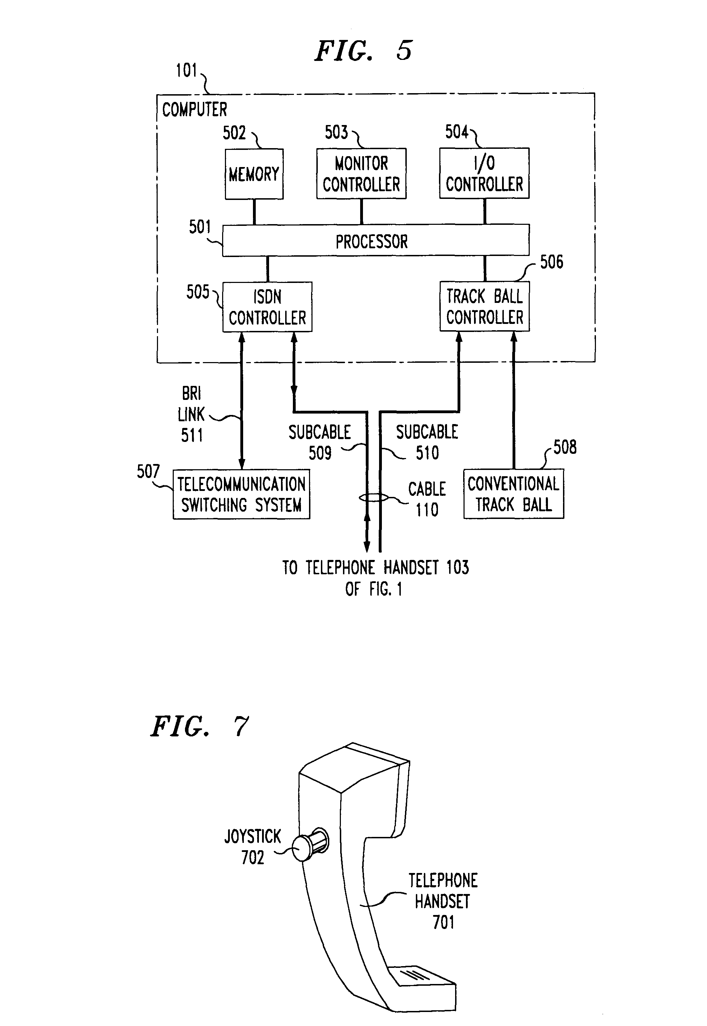

FIG. 5 illustrates computer 101, in greater detail, the manner in which a telecommunication link is established from computer 101 to telecommunication switching system 507. Computer 101 comprises blocks 501 through 506. I/O controller 504 interfaces standard I/O devices such as hard disc drives, etc. Processor 501 executes programs and stores data in memory 502. ISDN controller 505 interfaces BRI link 511 from telecommunication switching system 507. Processor 501 utilizes ISDN controller 505 to send messages to telecommunication switching system 507 to perform telecommunication switching functions such as call origination or call transfer. In addition, ISDN controller 505 is responsive to digitally encoded voice information received from BRI link 511 to convert that to an analog representation and to transmit it to the receiver portion of telephone handset 103 via subcable 509. Also, ISDN controller 505 is responsive to analog voice information received from telephone handset 103 to digitally encode that and transmit it via BRI link 511 to telecommunication switching system 507. The control of an ISDN BRI link such as BRI link 511 is well known in the art.

Track ball controller 506 receives control data from either telephone handset 103 via subcable 510 or from conventional track ball 508. Track ball controller 506 is responsive to control information from either of these sources to transmit that information to processor 501. Track ball controller 506 allows the user to utilize either the conventional track ball 508 or the track ball built into telephone handset 103. It is envisioned that during normal computer operations, when the user is not engaged in a telephone conversation, that the user will utilize conventional track ball 508.

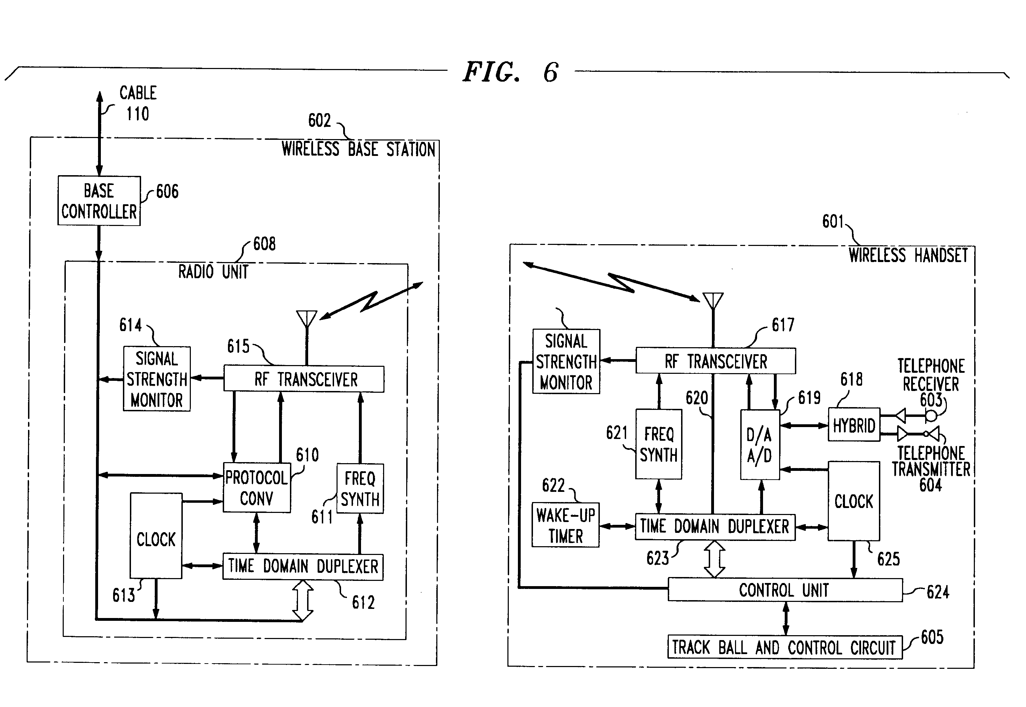

FIG. 6 illustrates in block diagram form wireless handset 601 and wireless base station 602 which are designed to function with computer 101 as illustrated in FIG. 5. The physical design of wireless handset 601 would be similar to that shown for telephone handset 103 and would include a track ball and button similar to track ball 104 and button 105 of telephone handset 103. With respect to a telephone conversation involving a telephone connected to telecommunication switching system 507 of FIG. 5 and wireless handset 601, voice information coming from telecommunication switching system 507 is communicated via ISDN controller 505 of FIG. 5 to base controller 606 of FIG. 6. Base controller 606, using well known techniques, transmits the voice information via radio unit 608 to wireless handset 601. Wireless handset 601 uses blocks 617, 619, and 618 to transform the telephone conversation into an audio sound which is reproduced by telephone receiver 603. Similarly, telephone conversation from wireless handset 601 is first converted by telephone transmitter 604 to an analog signal which is communicated through hybrid 618 to block 619 which digitally encodes the analog information and transmits it via RF transceiver 617 to RF transceiver 615. The latter transceiver, utilizing well known techniques in the art, transfers it via protocol converter 610, base controller 610, ISDN controller 605 to telecommunication switching system 507.

The control signals generated by track ball and control circuit 605 are transmitted to control unit 624 which multiplexes this information as control information and causes RF transceiver617 to transmitthe signals to RF transceiver 615 of wireless base station 602. Protocol converter 610 recovers the control signals communicated from track ball and control circuit 605 and transfers these control signals to base controller 606. Base controller 606 transmits these control signals to track ball controller 506 via cable 110 as illustrated in FIG. 5.

Greater details on the operations of blocks 610 through 615 of wireless base station 602 and blocks 617 through 625 of wireless handset 601 are given in European patent application number 93308137.4.

The advantages of wireless handset 601 are numerous. Not only can a user be free to move about their office while on a telephone conversation, but the user can control their computer from any place within their office. For example, the user could be engaged in a telephone conversation sitting at another table and need to look at a spread sheet, the user could utilize the track ball on wireless handset 601 to access the spread sheet. This mobility factor will become increasingly more important as the physical size of computer monitors become larger, since the user will be able to read the computer monitor at a greater distance.

FIG. 7 illustrates joystick 702 which is positioned on handset 701 so that joystick 701 can be manipulated by the forefinger of the hand grasping handset 701 while handset 701 is in a talking position. Clearly, the track ball and switches of FIGS. 1 and 4, respectively, could also be positioned as is joystick 702 on handset 701.

## Claims

1. A telephone handset (103) for controlling the exe- cut ion of computer programs on a separate computer (101) via selection of icons (106-108) on a separate computer display and the telephone handset having a receiver and transmitter for communication of voice information, comprising:
CHARACTERIZED IN THAT
a manipulandum (104, 105) protruding from a surface of the telephone handset within reach of hand grasping the telephone handset while the telephone handset is held in a speaking position with respect to the body of the person and with the manipulandum being used to select icons on the separate computer display; and
means (110) for communicating signals from the manipulandum to the separate computer.

2. The telephone handset of claim 1 wherein the manipulandum comprises a switch (105) and actuation of the switch signals the separate computer to execute a computer program corresponding to the selected icon.

3. The telephone handset of claim 1 further comprises a switch and actuation of the switch signals the separate computer to execute a computer program corresponding to the selected icon.

4. The telephone handset of claim 1 wherein the manipulandum is a track ball.

5. The telephone handset of claim 4 wherein the track ball is manipulated by the thumb of the hand grasping the telephone handset.

6. The telephone handset of claim 5 wherein the communicating means allows another device (508) for selecting the icons to be connected allowing either the other device or the track ball to be used to select icons.

7. The telephone handset of claim 6 further comprises a switch within reach of the hand grasping the telephone handset for communicating control information to the computer.

8. The telephone handset of claim 1 wherein the manipulandum is a joystick (202).

9. The telephone handset of claim 8 wherein the joystick is manipulated by the thumb of the hand grasping the telephone handset.

10. The telephone handset of claim 9 wherein the communicating means allows another device for selecting the icons to be connected allowing either the other device or the joystick to be used to select icons.

11. The telephone handset of claim 1 wherein the manipulandum is manipulated by a forefinger of the hand grasping the telephone handset.

12. The telephone handset of claim 11 wherein the manipulandum is a joystick.

13. The telephone handset of claim 1 wherein the manipulandum is a plurality of switches (402-406).

14. The telephone handset of claim 13 wherein the plurality of switches are manipulated by the thumb of the hand grasping the telephone handset.

15. The telephone handset of claim 14 wherein the communicating means allows another device for selecting the icons to be connected allowing either the other device or the plurality of switches to be used to select icons.

16. The telephone handset of claim 1 wherein the communicating means (617-625, 602) uses a wireless transmission medium.
